# EUROPÄISCHE PATENTSCHRIFT

(11) **EP 1 986 807 B1**
(45) Veröffentlichungstag und Bekanntmachung des Hinweises auf die Patenterteilung: **12.05.2010**
(21) Anmeldenummer: 07703560.8
(22) Anmeldetag: 23.02.2007
(51) Int. Cl.: B23B 31/00, B23Q 3/12, B23Q 11/00, B23B 31/107, B25B 23/00, B24B 45/00

(54) **EINSPANNFUTTER**
CLAMPING CHUCK
MANDRIN DE SERRAGE

(30) Priorität: 23.02.2006 DE 202006003096 U
(43) Veröffentlichungstag der Anmeldung: 05.11.2008
(73) Patentinhaber: Robert Schröder GmbH & Co. KG, 42369 Wuppertal (DE)
(72) Erfinder: CASEL, André, 42369 Wuppertal (DE)
(74) Vertreter: Füssel, Michael
(86) Internationale Anmeldenummer: PCT/EP2007/001597
(87) Internationale Veröffentlichungsnummer: WO 2007/096188

(56) Entgegenhaltungen:
- EP-A- 1 215 000
- EP-A- 1 338 377
- EP-A- 1 570 932
- WO-A-02/064295
- DE-A1- 4 136 584
- DE-A1- 10 203 292
- DE-A1- 19 841 593
- DE-U1-202006 013 821
- GB-A- 437 388
- US-A- 4 234 277
- US-A- 5 188 378
- US-A- 5 934 846
- US-B1- 6 802 494
- US-B1- 6 920 810

## Beschreibung

Die vorliegende Erfindung betrifft ein Einspannfutter für ein drehend angetriebenes Maschinenwerkzeug nach Oberbegriff des Hauptanspruchs.

Derartige Einspannfutter werden infolge der verwendeten Schiebehülse, mit welcher der Schaft des Maschinenwerkzeugs, z.B. eines Werkzeughalters, gehalten wird, auch als Schnellspannfutter bezeichnet.

Zum Werkzeugwechsel bedarf es lediglich einer Verlagerung der Schiebehülse, so dass der von der Schiebehülse beaufschlagte Klemmkörper dann innerhalb des Wandungsdurchbruchs, wo er sitzt, frei verlagerbar ist.

Somit wird der Schaft des Maschinenwerkzeug freigegeben und kann einfach aus dem Einspannfutter herausgezogen werden.

Aus der US PS 4,234,277 ist ein derartiges Schnellspannfutter bekannt, bei welchem allerdings die Zentrierung des Maschinenwerkzeugs stets spielbehaftet ist, da die drei Kugeln, welche die Einspannvorrichtung bilden, mit der Schiebehülse keine Mehrfachpassung bilden können die ein Schwirren des Werkzeugs bei hohen Drehzahlen vermeiden könnte.

Aufgabe der vorliegenden Erfindung ist es, ein Einspannfutter der gattungsgemäßen Art von einfacher Bauweise zu schaffen, bei welchem insbesondere schnell laufende Maschinenwerkzeuge in Miniaturausführung von lediglich einigen Millimetern Schaftdurchmessern mit einfachen Mitteln so gefertigt werden können, dass sie bei genauer Zentrierung trotzdem einerseits schnell auswechselbar sind und andererseits automatisch verdrehgesichert aufgenommen werden.

Diese Aufgabe löst die Erfindung mit den Merkmalen des Hauptanspruchs.

Die Erfindung zeichnet sich dadurch aus, dass die Schiebehülse in derjenigen Endstellung, welche sie unter Einfluss der Federvorspannung einnimmt, mit einem Innenbund unter Kontakt am Klemmkörper anliegt, der wiederum einen entsprechend hohen seitlichen Druck auf den kreiszylindrischen Schaft des Maschinenwerkzeugs ausübt. Da der Schaft des Maschinenwerkzeugs z.B. an derjenigen Stelle, wo der Klemmkörper aufsitzt, eine Sekantialnut oder eine sekantiale Abflachung besitzt, die allerdings nicht umläuft, ist darüber hinaus auch eine drehmomentfeste Einspannung dann gegeben, wenn der Klemmkörper auf der Abflachung oder der Sekantialnut ruht.

Dem Klemmkörper an sich kommt daher eine Doppelfunktion zu. Er dient einerseits der axialen Sicherung des Werkzeugschafts und andererseits aufgrund der relativ geringen Drehmomente, die an dem Werkzeugschaft angreifen, auch als Drehverhinderungssperre. Fällt die Sekantialnut darüber hinaus in axialer Richtung bis zu einer tiefsten Stelle ab, kann auf dem Werkzeugschaft auch eine Axialkraft bis zu einem Tiefenschlag ausgeübt werden.

Vorteilhafterweise weist hierzu der Schaft des Maschinenwerkzeugs an der betreffenden Stelle eine Bohrung oder - einfacher zu fertigen - eine lediglich sekantial ausgebildete Nut auf, in welche der Klemmkörper bei Verlagerung der Schiebehülse in Richtung der ausgeübten Federkraft dann eingreift.

Es ist die Doppelfunktion des Klemmkörpers in Verbindung mit der kreiszylindrischen Bohrung im Grundkörper, durch welche eine erhebliche Vereinfachung der Handhabung ermöglicht wird.

Dieser Vorteil wird dadurch erreicht, dass der Klemmkörper bei Drehung des Werkzeugschafts automatisch in die Sekantialnut einfällt.

Der Grundkörper kann außerdem zur Aufnahme des Werkzeugschafts einfach mit einer kreiszylindrischen Bohrung axial durchsetzt sein, weil die Drehmomentübertragung über den Klemmkörper erfolgt.

Eine Maßnahme zur Erzielung relativ hoher Drehmomente ist - wie gesagt - die Anbringung einer sekantialen Nut am Werkzeugschaft.

Eine andere Maßnahme beruht auf der Überlegung, dass der Klemmkörper unter Formschluss am Werkzeugschaft anliegt und folglich eine anfängliche Drehbewegung des Werkzeugschafts ermöglicht, bis er in die Sekantialnut einfällt.

Durch geeignete Maßnahmen kann daher auch eine sich selbst verstärkende Klemmwirkung in Umfangsrichtung einsetzen, wenn der Klemmkörper sich z.B. in dem Wandungsdurchbruch entsprechend verkantet.

Als letzte Maßnahme wäre es auch möglich, den Innenbund der Schiebehülse, welche außerhalb des Wandungsdurchbruchs am Klemmkörper anliegt, so zu gestalten, dass sich bereits bei geringer Verdrehung des Werkzeugschafts eine zwängende Einklemmung durch den Klemmkörper ergibt.

Wesentlich ist und bleibt allerdings die Doppelfunktion, da der Klemmkörper sowohl einer axialen Sicherung als auch einer Sicherung in Richtung einer möglichen Drehbewegung des Werkzeugschafts dient.

Insbesondere bei den üblichen Maschinenwerkzeugen mit einem dünnen Werkzeugschaft von etwa 3mm bis 4mm in Verbindung mit den heute ebenfalls üblichen sehr hohen Drehzahlen von bis zu 30.000 Umdrehungen pro Minute kommt es auch bei einer festen Einspannung etwa im unteren Drittel des Werkzeugschafts zu Resonanzschwingungen, die letztlich zum Schwirren des Maschinenwerkzeugs führen können.

Hier schafft die Erfindung Abhilfe, weil der Grundkörper im Kopfbereich, eine Zentrierung für den Werkzeugschaft bietet. Dies kann z.B. dadurch erzielt werden, dass der Grundkörper auf der Einsteckseite eine umlaufende Innennut aufweist, in welche ein Ring aus elastomerem Material eingepaßt ist.

Der Innendurchmesser des eingepaßten Ringes ist geringfügig kleiner als der Außendurchmesser des Werkzeugschafts, so dass hier eine zusätzliche radiale Einspannung des Werkzeugschafts hervorgerufen wird, mit deren Hilfe die freischwingende Länge des Werkzeugschafts zwischen der Angriffsstelle des Klemmkörpers und dem Sitz des Werkzeugs selbst verringert wird.

Dadurch lassen sich also die Schwingungsamplituden ggf. erheblich verringern, während zugleich die Eigenfrequenzen erhöht werden.

Ein unruhiger Lauf des Maschinenwerkzeugs durch die gefürchteten Eigenfrequenzen wird daher zuverlässig vermieden.

Im folgenden wird die Erfindung anhand von Ausführungsbeispielen näher erläutert.

Es zeigen:
- Fig.1: ein erstes Ausführungsbeispiel der Erfindung im Längsschnitt;
- Fig.2a: mögliches Ausführungsbeispiel eines zugehörigen Werkzeugschafts;
- Fig.3: ein weiteres Ausführungsbeispiel der Erfindung in Betriebsstellung; und
- Fig.4: das Ausführungsbeispiel gemäß Fig.3 in Ein- steckstellung.

Sofern im Folgenden nichts anderes gesagt ist, gilt die folgende Beschreibung stets für alle Figuren.

Die Figuren zeigen ein Einspannfutter 1 für ein drehend angetriebenes Maschinenwerkzeug.

Das Maschinenwerkzeug ist nicht gezeigt. Es ist lediglich der Schaft 6 des Maschinenwerkzeugs gezeigt.

Das Einspannfutter weist einen zentralen hohlzylindrischen Grundkörper 2 auf. Der Grundkörper 2 besitzt ein Antriebsende 3 für die Maschinenspindel 4 und ein gegenüberliegendes Einsteckende 5 für den Schaft 6 eines Maschinenwerkzeugs.

Der Grundkörper 2 wird umgeben von einer Schiebehülse 7, die - hier - in Richtung zum Einsteckende 3 unter Federvorlast steht.

Die Schiebehülse 7 kann auch in der anderen Richtung unter Federvorlast stehen. Zu diesem Fall geltend die folgenden Ausführungen entsprechend.

Die Federvorlast wird aufgebracht von einer Druckfeder 8, die sich zwischen einem Außenbund des Grundkörpers 2 und einem inneren Absatz der Schiebehülse 7 abstützt.

Die Schiebehülse ist zwischen einer vorderen Endstellung 9 und einer hinteren Endstellung 10 verlagerbar.

Sie besitzt eine umlaufende Innennut 11, welche in der durch die zusammengedrückte Druckfeder 8 vorbestimmten Endstellung 10 mit einem Wandungsdurchbruch 12 im Grundkörper 2 fluchtet.

Im Wandungsdurchbruch 12 befindet sich ein Klemmkörper 14, dessen Radialabmessungen größer als die Wandstärke des Grundkörpers 2 an der Stelle des Wandungsdurchbruchs 12 sind.

Ggf. muss auch noch ein Radialspiel 15 berücksichtigt werden, welches sich zwischen dem Innenbund 13 der Schiebehülse 7 und dem Außendurchmesser des Grundkörpers 2 an der Stelle des Wandungsdurchbruchs 12 ergibt.

Der Innenbund 13 ist an der Schiebehülse 7 an einer Stelle angeordnet, die in der vorderen Endstellung 9 der Schiebehülse 7, wenn die Schiebehülse unter der Vorlast der Druckfeder 8 steht, dem Wandungsdurchbruch 12 gegenübersteht.

Damit wird der Klemmkörper unausweichlich in der Sekantialnut 22 des Werkzeugschafts gehalten.

Wesentlich ist, dass der hohlzylindrische Grundkörper 2 insbesondere in demjenigen Längsbereich, in welchem der Schaft 6 des Maschinenwerkzeugs sitzt, innen kreiszylindrisch hohl ist, so dass er zur Aufnahme eines kreiszylindrischen Schafts 6 des Maschinenwerkzeugs ausgelegt ist.

Der Innendurchmesser dieser kreiszylindrischen Ausnehmung entspricht daher dem Außendurchmesser des kreiszylindrischen Schafts des Maschinenwerkzeugs, so dass der Schaft 6 prinzipiell in der Bohrung des Grundkörpers 2 frei drehbar ist.

Darüber hinaus dient der Klemmkörper 14 in derjenigen Position der Schiebehülse 7 in welche sich der Innenbund 13 am Klemmkörper 14 abstützt, in welchem also der Innenbund 13 der Schiebehülse 7 mit dem Wandungsdurchbruch 12 fluchtet, sowohl als axiale wie auch als drehmomentfeste Einspannvorrichtung des kreiszylindrischen Schafts 6 des Maschinenwerkzeugs, weil der Schaft des Maschinenwerkzeugs an geeigneter Position die Sekantialnut aufweist.

Der Klemmkörper 14 weist daher eine Doppelfunktion auf.

Er dient einerseits dazu, das axiale Herausfallen des Schafts 6 des Maschinenwerkzeugs zu verhindern, während zugleich auch eine Klemmfunktion in Umfangsrichtung vorgesehen ist.

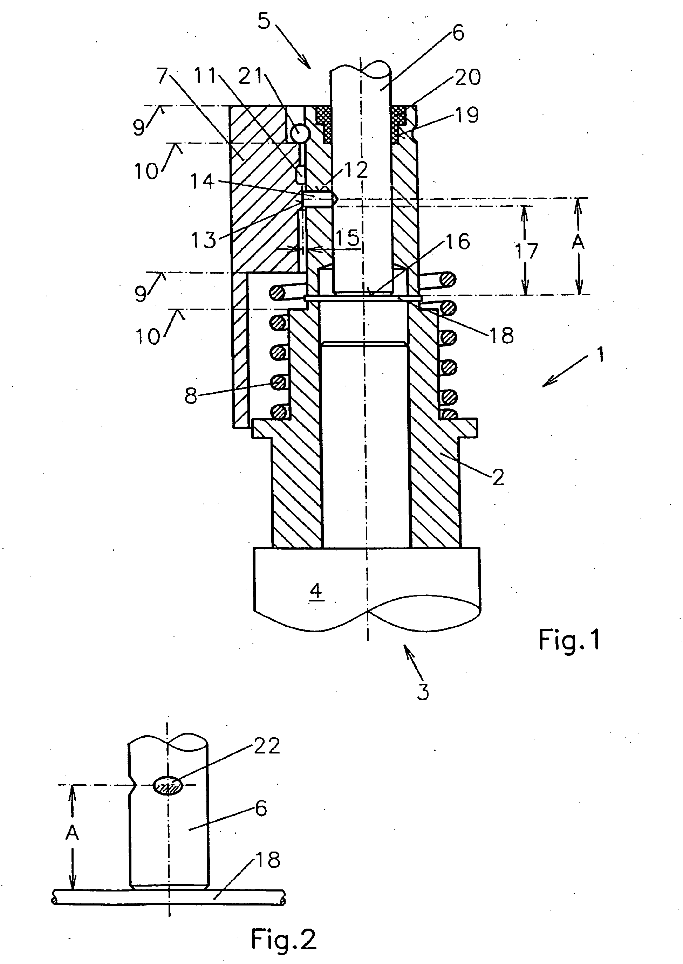

Dabei ist es wesentlich, dass der Wandungsdurchbruch 12 von einem Tiefenanschlag 16, gegen welchen beim Ausführungsbeispiel gemäß Fig.1 die Stirnfläche des eingesteckten Schafts 6 stößt, mit einem vorbestimmten Maß 17 beabstandet ist.

Dann kann nämlich die Sekantialnut mit einer abfallenden Flanke an einer Stelle ausgestaltet sein, auf welcher der Klemmkörper 14 dann zu liegen kommt, wenn der Schaft 6 des Maschinenwerkzeugs am Tiefenanschlag anliegt. Die axiale Spannfunktion ist so gewährleistet.

Auf diese Weise gelangt man nämlich zu einer Einspannung des Schaftes 6 im mittleren Bereich, so dass trotz des unvermeidlichen Radialspiels des Werkzeugschafts 6 in der kreiszylindrischen Bohrung des Grundkörpers 2 infolge der notwendigen Übergangspassung nur bedingt freie Schwingungen entstehen können.

Es entsteht nämlich durch den Klemmkörper 14 eine Einspannstelle des Schafts 6, die in Richtung zur Schaftmitte verlagert ist, so dass eventuell auftretende Resonanzschwingungen nur geringe Amplituden aufweisen werden und vor allem auch nur bei hohen Frequenzen.

Das vorgesehene Maß 17, welches den Abstand zum Klemmkörper zwischen dem Tiefenanschlag 16 und der Einspannstelle des Schafts 6 bestimmt, dient daher auch dem Zweck, die freie an eventuellen Resonanzschwingungen beteiligte Länge des Schafts 6 zu verringern.

In der Falle der Fig.1 wird der Tiefenanschlag 16 durch einen den Grundkörper 2 quer durchsetzten Stift 18 gebildet.

Der Stift ist vor dem Kopfende der Maschinenspindel 4 angeordnet und sitzt in einer dem Grundkörper 2 quer durchsetzenden Radialbohrung.

Beim Einstecken des Schaftes 6 stößt dieser mit seinem vorausgehenden Stirnende irgendwann an den quer verlaufenden Stift 18 und kann dann durch Loslassen der Schiebehülse 7 von dem Klemmkörper 14 axial und in Umfangsrichtung starr gehalten werden sobald der Klemmkörper in die Sekantialnut eingefallen ist.

Da die Schiebehülse 7 zudem in dieser Endstellung durch die Druckfeder 8 gegen den oberen Sperrring 21 gehalten wird, ist der Schaft 6 betriebssicher eingespannt.

Der Sperrring 21 kann auch farblich gekennzeichnet sind, um zu signalisieren, ob die Schiebehülse 7 voll ausgefahren ist.

Will man darüber hinaus die freie Schwinglänge des eingesteckten Schafts 6 noch weiter verringern, bietet es sich an, im Bereich des Kopfendes des Grundkörpers 2 eine umlaufende Innennut 19 vorzusehen, in die ein Ring aus elastomerem Material eingelegt ist.

Dieser Ring besitzt einerseits gute Dämpfungseigenschaften und kann darüber hinaus einen Innendurchmesser aufweisen, der geringfügig kleiner als der Außendurchmesser des Schaftes 6 ist.

Dies gilt in gleichem Maße für die kreiszylindrische Ausnehmung des Grundkörpers 2, in welche der Schaft 6 des Maschinenwerkzeugs eingesteckt ist.

Infolge der dann elastischen aber spielfreien Umfassung des Schaftes 6 an der am weitesten in Richtung zum Werkzeug vorgelagerten Stelle werden die an einer freien Schwingung eventuell beteiligten Längsabmessungen des Schafts 6 weiter verringert und infolge dessen die Amplituden verkleinert und die Frequenzen erhöht.

Der Elastomerring 20 kann z.B. aus Gummi oder Silikon oder ähnlichem Material bestehen.

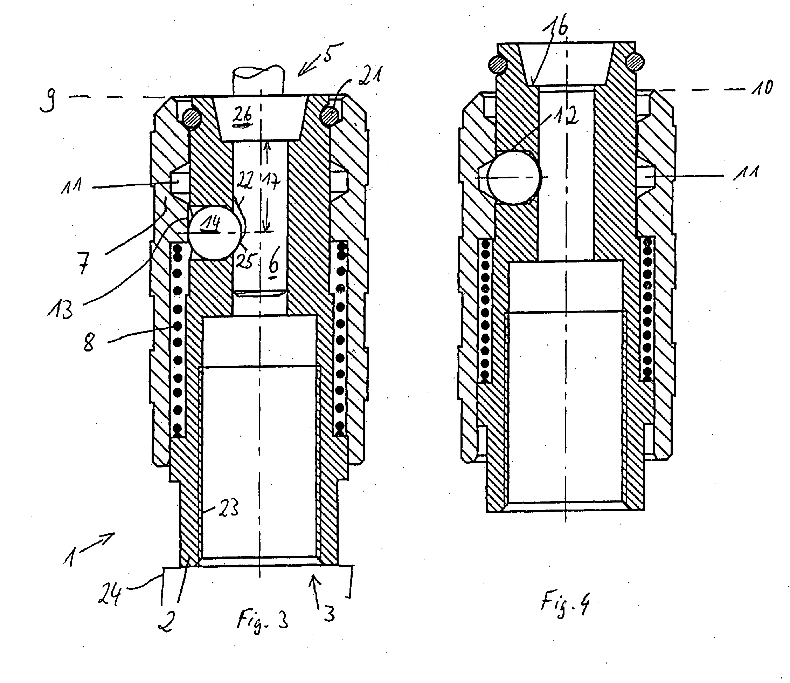

Anstelle des Elastomerringes kann an dieser Stelle auch eine Zentriervorrichtung in Form einer Spannzange oder von Stahlfedern o.ä. vorgesehen sein. Auch kommt ein konischer Sitz, der einen Zentrierkonus 26 bildet, entsprechend Fig.3 und 4 in Betracht, in welchem ein komplementär ausgestalteter Werkzeugschaft sitzt. Der konische Sitz bildet hier an seiner durchmesserkleinsten Stelle zusätzlich auch den Tiefenanschlag 16. Diese Weiterbildung bietet sich insbesondere bei größeren Schaftdurchmessern als 3mm bis 4mm an, z.B. 6mm bis 12 mm oder mehr.

Darüber hinaus zeigt Fig.2 eine Detailansicht eines Schaftes 6, der von dem Klemmkörper 14 in vorgegebenem Abstand A - von der Stirnfläche des Einsteckendes aus gemessen - beaufschlagt wird.

Dabei bemisst sich der Abstand A von derjenigen Mantellinie des Stiftes 18, welche die Einstecktiefe des Schafts 6 in das Einspannfutter 1 begrenzt bis zu derjenigen Stelle, wo der Klemmkörper 14 den Schaft 6 beaufschlagt.

Zur Erzielung einer besonders hohen drehmomentfesten Einspannung wird vorgeschlagen, dass derartiger Werkzeugschaft 6 mit zumindest einer lediglich über einen Teilumfang laufenden Nut 22 versehen ist, so dass der Klemmkörper 14, der von dem Innenbund 13 in Klemmstellung gehalten wird, tatsächlich in Umfangsrichtung eine Klemmwirkung auf den Schaft 6 ausübt, welche zu einer drehmomentfesten Einspannung führt.

Dabei wird der Klemmkörper bei einer Drehbewegung des Schaftes 6 in Umfangsrichtung gegen den Innenbund 13 gepresst und auf diese Weise auf Druck belastet. Da der Klemmkörper 14 radial nicht ausweichen kann, ist die erforderliche Klemmfunktion in Umfangsrichtung sichergestellt.

Der Innenbund 13 verhindert dabei ein radiales Ausweichen des Klemmkörpers nach außen, so dass das von der Maschinenspindel 4 ausgeübte Drehmoment über die Klemmfunktion des Klemmkörpers 14 in Umfangsrichtung voll auf den Schaft 6 des Maschinenwerkzeugs übertragen wird.

Greift zusätzlich der Klemmkörper 14 auf einer abfallenden Schräge 25 der Sekantialnut 22 an, ist auch die axiale Einspannung unverrückbar fest. Dies ist im schraffierten Bereich der Sekantialnut 22 gemäß Fig.2 realisierbar.

### Bezugszeichenliste:

- 1: Einspannfutter
- 2: Grundkörper
- 3: Antriebsende
- 4: Maschinenspindel
- 5: Einsteckende
- 6: Schaft des Maschinenwerkzeugs
- 7: Schiebehülse
- 8: Druckfeder
- 9: vordere Endstellung
- 10: hintere Endstellung
- 11: Innennut
- 12: Wandungsdurchbruch
- 13: Innenbund
- 14: Klemmkörper
- 15: Radialspiel
- 16: Tiefenanschlag
- 17: Abstand
- 18: Stift
- 19: Innennut
- 20: Elastomerring
- 21: Sperrring
- 22: Nut
- 23: Innengewinde
- 24: Maschinenspindel
- 25: abfallende Schräge
- 26: Zentrierkonus
- A: Abstand

## Patentansprüche

1. Einspannfutter (1) für ein drehend angetriebenes Maschinenwerkzeug, mit einem zentralen hohlzylindrischen Grundkörper (2), der ein Antriebsende (3) für die Maschinenspindel (4) und ein gegenüberliegendes Einsteckende (5) für den Schaft (6) eines Maschinenwerkzeugs aufweist; der Grundkörper (2) wird umgeben von einer Schiebehülse (7), die in eine Richtung unter Federvorlast (8) steht; die Schiebehülse (7) ist zwischen zwei Endstellungen (9,10) verlagerbar; die Schiebehülse (7) besitzt eine umlaufende Innennut (11) dort, wo die Innenwand der Schiebehülse in derjenigen Endstellung (10), die in Richtung gegen die Federvorlast (8) erreicht wird, vor einem Wandungsdurchbruch (12) des Grundkörpers (2) steht sowie einen umlaufenden Innenbund (13) dort, wo der Innenbund (13) in derjenigen Endstellung (9), die in Richtung der Federvorlast (8) erreicht wird, mit demselben Wandungsdurchbruch (12) fluchtet; in dem Wandungsdurchbruch (12) sitzt ein Klemmkörper (14) dessen Radialabmessung größer als an der Stelle des Wanddurchbruchs die Wandstärke des Grundkörpers (2) zuzüglich eines eventuell vorliegenden Radialspiels (15) zwischen dem Innenbund (13) der Schiebehülse (7) und dem Außendurchmesser des Grundkörpers (2) ist, wobei der hohlzylindrische Grundkörper (2) innen kreiszylindrisch hohl zur Aufnahme eines kreiszylindrischen Schafts (6) des Maschinenwerkzeugs ist und dass der eine Klemmkörper (14) bei vor dem Wandungsdurchbruch (12) stehendem Innenbund (13) der Schiebehülse (7) sowohl als axiale wie auch als drehmomentfeste Einspannvorrichtung des kreiszylindrischen Schafts (6) **dadurch** dient, dass er in die innere kreiszylindrische Ausnehmung des Grundkörpers hineinragtund dass der Wandungsdurchbruch (12) von einem Tiefenanschlag (16) des Einspannfutters (1) ausgehend mit einer vorbestimmten Maß (17) zum Tiefenanschlag (16) beabstandet ist, **dadurch gekennzeichnet, dass** der Grundkörper (2) an seinem Einsteckende eine umlaufende Innennut (19) zur Aufnahme eines Ringes (20) aus elastomerem Material aufweist, der eine Zentriervorrichtung für den Schaft (6) des Maschinenwerkzeugs ist zur Vermeidung von dessen Resonanzschwingungen bei hohen Drehzahlen von bis zu 30000 Umdrehungen pro Minute.

2. Einspannfutter (1) nach Anspruch 1, **dadurch gekennzeichnet, dass** der Innendurchmesser des Ringes (20) aus elastomerem Material geringfügig kleiner als die kreiszylindrische Ausnehmung des Grundkörpers (2) für den Schaft (6) des Maschinenwerkzeugs ist.

3. Einspannfutter (1) nach einem der Ansprüche 1 bis 2, **dadurch gekennzeichnet, dass** der Grundkörper (2) an seinem Einsteckende eine zusätzliche Spannzange oder einen Zentrierkonus (26) aufweist.

4. Einspannfutter (1) nach einem der Ansprüche 1 bis 2, **dadurch gekennzeichnet, dass** der Grundkörper (2) am Antriebsende für die Maschinenspindel (24) ein Innengewinde (23)aufweist.

## Claims

1. Clamping chuck (1) for a rotatably driven machine tool, having a central, hollow cylindrical base body (2) which comprises a drive end (3) for the machine spindle (4) and an opposite insertion end (5) for the shaft (6) of a machine tool; the base body (2) is surrounded by a sliding sleeve (7) which is spring-preloaded (8) in one direction; the sliding sleeve (7) can be displaced between two end positions (9, 10); the sliding sleeve (7) has a circumferential inner groove (11) where, in the end position (10) which is reached in the direction against the spring preload (8), the inner wall of the sliding sleeve is located in front of a wall opening (12) of the base body (2), as well as a circumferential inner collar (13) where, in the end position (9) which is reached in the direction of the spring preload (8), the inner collar (13) is flush with the same wall opening (12); a clamping body (14) is seated in the wall opening (12), the radial dimension of this clamping body being greater than the wall thickness of the base body (2) at the location of the wall opening including any possibly existing radial clearance (15) between the inner collar (13) of the sliding sleeve (7) and the outer diameter of the base body (2), wherein the interior of the hollow cylindrical base body (2) is circular-cylindrically hollow so as to accommodate a circular-cylindrical shaft (6) of the machine tool, and that when the inner collar (13) of the sliding sleeve (7) is located in front of the wall opening (12) the one clamping body (14) serves both as an axial and torque-resistant clamping device of the circular-cylindrical shaft (6) by virtue of the fact that it extends into the inner circular-cylindrical opening of the base body and that the wall opening (12) is spaced apart from a depth stop (16) of the clamping chuck (1) starting with a predetermined dimension (17) with respect to the depth stop (16), **characterised in that** the base body (2) comprises at its insertion end a circumferential inner groove (19) for accommodating a ring (20) consisting of an elastomer material which is a centring device for the shaft (6) of the machine tool for preventing resonance vibrations thereof in the case of high rotational speeds of up to 30000 revolutions per minute.

2. Clamping chuck (1) as claimed in Claim 1, **characterised in that** the inner diameter of the ring (20) consisting of elastomer material is slightly smaller than the circular-cylindrical opening of the base body (2) for the shaft (6) of the machine tool.

3. Clamping chuck (1) as claimed in any one of Claims 1 to 2, **characterised in that** at its insertion end, the base body (2) comprises an additional collet or a centring cone (26).

4. Clamping chuck (1) as claimed in any one of Claims 1 to 2, **characterised in that** at the drive end for the machine spindle (24), the base body (2) comprises an inner thread (23).

## Revendications

1. Manchon de serrage (1) pour un outil de machine entraîné en rotation, avec un corps de base cylindrique creux central (2) qui présente une extrémité d'entraînement (3) pour la broche de machine (4) et une extrémité d'introduction opposée (5) pour la tige (6) d'un outil de machine ; le corps de base (2) est entouré par un manchon coulissant (7) qui est soumis dans une direction à une contrainte élastique (8) ; le manchon coulissant (7) est apte à être déplacé entre deux positions de fin de course (9, 10) ; le manchon coulissant (7) a une rainure intérieure circulaire (11) à l'endroit où sa paroi intérieure, dans la position de fin de course (10) qui est atteinte en sens inverse par rapport à la contrainte élastique (8), se trouve devant une ouverture de paroi (12) du corps de base (2), et un épaulement intérieur circulaire (13) à l'endroit où l'épaulement intérieur (13), dans la position de fin de course (9) qui est atteinte dans le sens de la contrainte élastique (8), est dans l'alignement de l'ouverture de paroi (12) ; dans l'ouverture de paroi (12) se trouve un corps de serrage (14) dont les dimensions radiales sont supérieures à l'épaisseur de paroi du corps de base (2) à l'endroit de l'ouverture de paroi, plus un éventuel jeu radial (15) entre l'épaulement intérieur (13) du manchon coulissant (7) et le diamètre extérieur du corps de base (2), étant précisé que le corps de base cylindrique creux (2) présente à l'intérieur une forme cylindrique ronde creuse pour recevoir une tige cylindrique ronde (6) de l'outil de machine, et qu'un corps de serrage (14), quand l'épaulement intérieur (13) du manchon coulissant (7) se trouve devant l'ouverture de paroi (12), sert de dispositif de serrage à la fois axial et fixe en rotation de la tige cylindrique ronde (6) grâce au fait qu'il dépasse dans le creux cylindrique rond intérieur du corps de base et que l'ouverture de paroi (12) est espacée d'une butée de profondeur (16) du mandrin de serrage (1) suivant une distance prédéfinie (17), à partir de la butée de profondeur (16), **caractérisé en que** le corps de base (2) présente à son extrémité d'introduction une rainure intérieure circulaire (19) pour recevoir une bague (20) en matériau élastomère qui constitue un dispositif de centrage pour la tige (6) de l'outil de machine, pour éviter les vibrations de résonance de celui-ci à des vitesses de rotation élevée allant jusqu'à 30000 tours par minute.

2. Mandrin de serrage (1) selon la revendication 1, **caractérisé en ce que** le diamètre intérieur de la bague (20) en matériau élastomère est légèrement inférieur au creux cylindrique rond du corps de base (2) pour la tige (6) de l'outil de machine.

3. Mandrin de serrage (1) selon l'une des revendications 1 à 2, **caractérisé en ce que** le corps de base (2) présente à son extrémité d'introduction une pince de serrage supplémentaire ou un cône de centrage (26).

4. Mandrin de serrage (1) selon l'une des revendications 1 à 2, **caractérisé en ce que** le corps de base (2) présente à son extrémité d'entraînement pour la broche de machine (24) un filetage intérieur (23).
